# EUROPÄISCHE PATENTANMELDUNG

(11) **EP 3 029 486 A1**
(43) Veröffentlichungstag der Anmeldung: **08.06.2016**
(21) Anmeldenummer: 14196091.4
(22) Anmeldetag: 03.12.2014
(51) Int. Cl.: G01S 7/539, G01S 15/87

(54) **Verfahren und Vorrichtung zur Objekterkennung mittels Ultraschall**

(71) Anmelder: Pepperl & Fuchs GmbH, 68307 Mannheim (DE)
(72) Erfinder: Steiner, Till, 68307 Mannheim (DE)
(74) Vertreter: Schiffer, Axel Martin

(57) **Zusammenfassung**

Ein Verfahren zur Objekterkennung mittels Ultraschall weist eine Lernphase (LP) und eine der Lernphase zeitlich nachfolgende Erkennungsphase (CP) auf. In der Lernphase empfängt eine Mehrzahl (R1, R2, R3) von Ultraschallempfängern Ultraschallwellen, die von wenigstens einem Ultraschallsender (T1, T2, T3) ausgesandt und an wenigstens einem in der Erkennungsphase zu erkennenden Objekt (O1) reflektiert wurden oder werden. Aus den während der Lernphase empfangenen Ultraschallwellen werden Merkmalsvektoren (M1) gewonnen und in einer Speichereinrichtung (S) gespeichert. In der Erkennungsphase empfängt die Mehrzahl (R1, R2, R3) von Ultraschallempfängern Ultraschallwellen, die von dem wenigstens einen Ultraschallsender (T1, T2, T3) ausgesandt und an dem wenigstens einen in der Erkennungsphase zu erkennenden Objekt (O1) reflektiert wurden oder werden. Aus den während der Erkennungsphase empfangenen Ultraschallwellen werden Merkmalsvektoren (M2) gewonnen und wenigstens teilweise mit während der Lernphase gespeicherten Merkmalsvektoren verglichen. Die Erkennung eines Objektes erfolgt durch Minimierung eines im Raum der Merkmalsvektoren definierten Abstandsmaßes zwischen wenigstens einem Merkmalsvektor eines in der Erkennungsphase zu erkennenden Objektes und wenigstens einem in der Lernphase gespeicherten Merkmalsvektor.

## Beschreibung

Die vorliegende Erfindung bezieht sich auf ein Verfahren und eine Vorrichtung zur Objekterkennung mittels Ultraschall.

Derartige Verfahren und Vorrichtungen sind beispielsweise aus der DE 37 102 39 A1 bekannt, die eine Anordnung und ein Verfahren zur Objekterfassung offenbart mit zumindest einem Ultraschallsender und einem die Echoimpulse aufnehmenden Ultraschallempfänger, sowie mit einer Sender- und Empfängersteuerung und mit einer zumindest ein Vergleichsprofil des zu erfassenden Objektes speichernden Auswerteschaltung. Vom Sender wird eine Folge von unterschiedlichen Frequenzen abgestrahlt, deren objektspezifisches Reflexionsspektrum gespeichert wird und als Vergleichsspektrum bei der Objekterfassung abgerufen wird.

Eine Aufgabe der vorliegenden Erfindung kann darin gesehen werden, eine neuartige, nach Möglichkeit verbesserte technische Lehre zur Objekterkennung mittels Ultraschall anzugeben.

Diese Aufgabe wird durch ein Verfahren bzw. durch eine Vorrichtung nach einem der unabhängigen Patentansprüche gelöst. Bevorzugte Ausführungsbeispiele der vorliegenden Erfindung bilden den Gegenstand der abhängigen Ansprüche.

Das erfindungsgemäße Verfahren zur Objekterkennung mittels Ultraschall weist eine Lernphase und eine der Lernphase zeitlich nachfolgende Erkennungsphase mit folgenden Schritten auf:
a) In der Lernphase empfängt eine Mehrzahl von Ultraschallempfängern Ultraschallwellen, die von wenigstens einem Ultraschallsender ausgesandt und an wenigstens einem in der Erkennungsphase zu erkennenden Objekt reflektiert wurden oder werden;
b) aus den während der Lernphase empfangenen Ultraschallwellen werden Merkmalsvektoren gewonnen und in einer Speichereinrichtung gespeichert;
c) in der Erkennungsphase empfängt die Mehrzahl von Ultraschallempfängern Ultraschallwellen, die von dem wenigstens einen Ultraschallsender ausgesandt und an dem wenigstens einen in der Erkennungsphase zu erkennenden Objekt reflektiert wurden oder werden;
d) aus den während der Erkennungsphase empfangenen Ultraschallwellen werden Merkmalsvektoren gewonnen und wenigstens teilweise mit während der Lernphase gespeicherten Merkmalsvektoren verglichen;
e) die Erkennung eines Objektes erfolgt durch Minimierung eines im Raum der Merkmalsvektoren definierten Abstandsmaßes zwischen wenigstens einem Merkmalsvektor eines in der Erkennungsphase zu erkennenden Objektes und wenigstens einem in der Lernphase gespeicherten Merkmalsvektor.

Unter dem Begriff Objekterkennung sind im Sinne der vorliegenden Erfindung Technologien zu verstehen, bei denen die Identität, der Typ, die Zugehörigkeit zu einer Klasse oder Eigenschaften eines Objekts oder mehrerer Objekte mit Hilfe von Messdaten von Sensoren ermittelt oder bestimmt werden. Die Zuordnung eines zu erkennenden Objekts zu einer Objektidentität, einem Objekttyp, einer Objektklasse oder zu bestimmten Objekteigenschaften wird dabei im Allgemeinen mit einer gewissen Unsicherheit behaftet sein, also häufig nur mit Hilfe von Wahrscheinlichkeitsaussagen möglich sein.

Mit dem Begriff Ultraschall bezeichnet man in der Technik allgemein Schall mit Frequenzen oberhalb des Hörfrequenzbereichs des Menschen. Er umfasst Frequenzen ab etwa 16 kHz. In Gasen und Flüssigkeiten breitet sich Ultraschall überwiegend als Longitudinalwelle aus. In Festkörpern kommt es zusätzlich auch zur Ausbreitung von Transversalwellen. Ultraschall wird je nach Material eines Hindernisses an diesem reflektiert, in ihm absorbiert, gestreut oder tritt hindurch. Wie bei anderen Wellen treten je nach den vorliegenden Umständen auch Brechung, Beugung und Interferenz auf.

Zur Erzeugung von Ultraschall in Luft eignen sich insbesondere dynamische oder elektrostatische Lautsprecher sowie auch sogenannte Piezolautsprecher oder Piezowandler, insbesondere Platten aus piezoelektrischer Keramik, die durch Umkehr des Piezo-Effekts zu Schwingungen angeregt werden. Der Empfang von Ultraschallwellen kann prinzipiell mit den gleichen elektrischen Wandlern geschehen, wie sie auch zu dessen Erzeugung verwendet werden. Die erhaltenen elektrischen Signale können insbesondere einer Frequenz-, Phasen- oder Amplitudenauswertung unterzogen werden. Die Anwendung von Ultraschall zur Erzeugung von Bildern bezeichnet man als Sonografie.

Das erfindungsgemäße Verfahren ist in eine Lernphase und in eine sich zeitlich an die Lernphase anschließende oder der Lernphase zeitlich folgenden Erkennungsphase gegliedert. Während der Lernphase empfängt eine Mehrzahl von Ultraschallempfängern Ultraschallwellen, die von wenigstens einem Ultraschallsender ausgesandt und an wenigstens einem in der Erkennungsphase zu erkennenden Objekt reflektiert wurden oder werden. Aus den während der Lernphase empfangenen Ultraschallwellen werden Merkmalsvektoren gewonnen und in einer Speichereinrichtung gespeichert.

Während der Erkennungsphase empfängt die Mehrzahl von Ultraschallempfängern Ultraschallwellen, die von dem wenigstens einen Ultraschallsender ausgesandt und an dem wenigstens einen in der Erkennungsphase zu erkennenden Objekt reflektiert wurden oder werden. Aus den während der Erkennungsphase empfangenen Ultraschallwellen werden Merkmalsvektoren gewonnen und wenigstens teilweise mit während der Lernphase gespeicherten Merkmalsvektoren verglichen. Die Erkennung eines Objektes erfolgt durch Minimierung eines im Raum der Merkmalsvektoren definierten Abstandsmaßes zwischen wenigstens einem Merkmalsvektor eines in der Erkennungsphase zu erkennenden Objektes und wenigstens einem in der Lernphase gespeicherten Merkmalsvektor.

Lernverfahren im Sinne der vorliegenden Erfindung sind Verfahren aus dem Bereich des maschinellen Lernens ("machine learning"). Maschinelles Lernen ist ein in der sogenannten künstlichen Intelligenz üblicher Begriff für die künstliche Generierung von Wissen aus Erfahrungsdaten. Ein künstliches System lernt dabei in einer Lernphase aus Beispielen und kann diese Beispiele nach Beendigung der Lernphase verallgemeinern. Es lernt also nicht nur die ihm präsentierten Beispiele, sondern es lernt auch Gesetzmäßigkeiten in den Lerndaten. So kann das System in der Erkennungsphase auch Datensätze als zu bestimmten Klassen zugehörig erkennen, die ihm während der Lernphase nicht präsentiert wurden.

Maschinelle Lernverfahren können nach der Art der Wissensrepräsentation unterschieden werden. Man unterscheidet üblicherweise zwischen symbolischen Systemen, in denen das Wissen explizit repräsentiert wird, und subsymbolischen Systemen wie beispielsweise neuronalen Netzen, die zwar auf Algorithmen basieren, die jedoch keinen Einblick in erlernte Zusammenhänge erlauben, weil Wissen durch solche neuronalen Netze implizit (also nicht explizit) repräsentiert wird.

Maschinelle Lernverfahren basieren auf normalerweise auf Algorithmen, die üblicherweise in überwachte und unüberwachte Lernverfahren klassifiziert werden. Beim überwachten Lernen (engl. supervised learning) lernt der Algorithmus eine vorzugsweise parametrische Funktion aus gegebenen Paaren von Ein- und Ausgaben (Variablen). Dabei stellt während des Lernens ein "Lehrer" den korrekten Funktionswert zu einer Eingabe bereit. Im Rahmen der vorliegenden Erfindung bevorzugte Beispiele von überwachten Lernverfahren sind künstliche neuronale Netze.

Künstliche neuronale Netze basieren meist auf der Vernetzung vieler (insbesondere McCulloch-Pitts-) Neuronen oder auf Abwandlungen davon. Mathematisch gesehen sind künstliche neuronale Netze parametrische Funktionssysteme, deren Variablen und Funktionswerte den Eingabe- und/oder Ausgabewerten des Neuronalen Netzes entsprechen, und deren Parameter den synaptischen Gewichten der Verbindungen und/oder den Schwellwerten der Neuronen entsprechen. Das Lernverfahren stellt in mathematischer Hinsicht eine schrittweise Adaption der Parameter des Funktionssystems dar mit dem Ziel, die Werte dieser Parameter möglichst so einzustellen, dass nach dem Abschluss der Lernphase das Funktionssystem die gelernten (Beispiel-)Daten möglichst gut repräsentiert.

Je nach Auswahl der verwendeten Funktionstypen sind künstliche neuronale Netze in der Lage, komplizierte nichtlineare Funktionen über einen "Lern"-Algorithmus, der durch eine iterative oder rekursive Vorgehensweise aus vorhandenen Ein- und gewünschten Ausgabewerten alle Parameter der Funktion zu bestimmen versucht, zu erlernen.

In künstlichen neuronalen Netzen bezeichnet die sogenannte "Topologie" die Struktur des Netzes. Damit ist üblicherweise die Zahl der künstlichen Neuronen gemeint, die sich auf den Schichten des Netzes (den sogenannten "Layers") befinden und die Art und Weise, in der diese Neuronen miteinander verbunden sind. Künstliche Neuronen können auf beinahe beliebige Weise zu einem künstlichen neuronalen Netz verbunden werden. Die obere Schicht eines künstlichen neuronalen Netzes, deren Neuronenausgaben meist als einzige außerhalb des Netzes sichtbar sind, wird Ausgabeschicht (engl. output layer) genannt. Die Ausgabewerte dieser Schicht entsprechen den Funktionswerten des parametrischen Funktionensystems, zu dem diese künstlichen neuronalen Netze mathematisch äquivalent sind. Hinter diesen Schichten liegende tiefere Schichten des künstlichen neuronalen Netzes werden üblicherweise als verdeckte Schichten (Hidden Layers) bezeichnet.

Die im Zusammenhang mit einem künstlichen neuronalen Netz verwendeten Lernverfahren sind von der Struktur des künstlichen neuronalen Netzes abhängig. So kann beispielsweise mit der sogenannten Delta-Regel (zumindest in ihrer üblichen Form) nur ein einschichtiges Netz trainiert werden. Künstliche neuronale Netze müssen nicht zwingend homogen sein. Es sind auch Kombinationen aus verschiedenen Netztopolgien üblich, um die Vorteile unterschiedlicher Netztopologien kombinieren zu können.

Es gibt beispielsweise reine sogenannte Feedforward-Netze, bei denen eine Schicht immer nur mit der nächsthöheren Schicht verbunden ist. Darüber hinaus gibt es aber auch Netze, bei denen Verbindungen in beiden Richtungen erlaubt sind. Das Finden der passenden Netzstruktur entspricht mathematisch gesehen der Auswahl eines geeigneten parametrischen Funktionensystems.

Typische Strukturen sind:
Das einschichtige Feedforward-Netz: Einschichtige Netze mit der Feedforward-Eigenschaft (engl. für vorwärts) sind die einfachsten Strukturen künstlicher neuronaler Netze. Sie besitzen lediglich eine Ausgabeschicht. Die Feedforward-Eigenschaft besagt, dass Neuronenausgaben nur in Verarbeitungsrichtung geleitet werden und nicht durch eine rekurrente Kante zurückgeführt werden können.

Das mehrschichtige Feedforward-Netz: Mehrschichtige Netze besitzen neben der Ausgabeschicht auch verdeckte Schichten, deren Ausgabe wie beschrieben, außerhalb des Netzes nicht sichtbar sind. Sie entsprechen in mathematischer Hinsicht komplexeren parametrischen Funktionensystemen als einschichtige Feedforward-Netze. Durch die komplexere Struktur der Abhängigkeit der Funktionswerte von den Variablen und den Parametern ist eine Adaption an komplexere statistische zusammenhänge in den Daten während der Lernphase möglich. Sogenannte verdeckte Schichten verbessern häufig die Abstraktion (d.h. die Verallgemeinerung der erlernten Beispieldaten) solcher Netze, führen jedoch auch häufig zu einer Verlängerung der Lernphase.

Sogenannte Rekurrente Netze besitzen im Gegensatz dazu Feedforward-Netzen auch rückgerichtete (rekurrente) Verbindugen (engl. feedback loops) und enthalten somit auch Rückkopplungen. Solche Kanten werden häufig mit einer Zeitverzögerung versehen, so dass bei einer schrittweisen Verarbeitung die Neuronenausgaben der vergangenen Einheit wieder als Eingaben angelegt werden können. Diese Rückkopplungen ermöglichen einem künstlichen neuronalen Netz ein dynamisches Verhalten und statten es mit einem Gedächtnis aus. Derartige Netze entsprechen in mathematischer Hinsicht Zustandsautomaten, bei denen die Übergangswahrscheinlichkeiten zwischen Zuständen von den Werten der zu lernenden Parameter abhängen.

Wichtige Beispiele für künstliche neuronale Netze sind sogenannte BoltzmannMaschinen und sogenannte Hopfield-Netze.

Boltzmann-Maschinen sind stochastische künstliche neuronale Netze, die von Geoffrey Hinton und Terrence J. Sejnowski 1985 entwickelt wurden. Sie sind nach der Boltzmann-Verteilung der statistischen Physik benannt. Boltzmann Maschinen ohne Beschränkung der Verbindungen lassen sich häufig nur schwer trainieren, sind aber grundsätzlich in der Lage, auch komplexe statistische Zusammenhänge zu erlernen. Beschränkt man die Verbindungen zwischen den Neuronen jedoch, lässt sich der Lernvorgang stark vereinfachen, wodurch insbesondere beschränkte Boltzmann Maschinen sich erfolgreich zur Lösung praktischer Probleme einsetzen lassen.

Hopfield-Netze gehören zur Klasse der künstlichen neuronalen Netze mit Rückkopplung (sogenannte Feedback-Netze). Bei einem Hopfield-Netz existiert nur eine Schicht, die gleichzeitig als Ein- und Ausgabeschicht fungiert. Jedes der binären McCulloch-Pitts-Neuronen ist mit jedem anderen Neuron, nur nicht mit sich selbst, verbunden. Die Eingangs- und Ausgangswerte der Neuronen können die Werte -1 und 1 annehmen, die somit den Zuständen "feuert nicht" und "feuert" entsprechen. In Hopfield-Netzwerken sind die synaptischen Gewichte symmetrisch, d.h. es gilt w_{i,j} = w_{j,i} für alle i und j. Diese Symmetriebedingung ist eine Voraussetzung dafür, dass eine Energiefunktion aufgestellt werden kann, welche eine physikalische Interpretation des Hopfield-Netzes und seine Analyse mit Methoden der statistischen Mechanik erlaubt und stellt in der Praxis eine Voraussetzung für die Existenz stabiler Gleichgewichtszustände dar.

Falls die Vektoren für die Ein- und Ausgabe, die sogenannten Merkmalsvektoren, Elemente desselben Merkmalsraums sind, spricht man auch von einem Autoassoziationsnetz. Solche künstlichen neuronalen Netze können auch als parametrische Assoziativspeicher aufgefasst werden, deren Parameter im Rahmen eines Lernverfahrens so adaptiert werden, dass der Assoziativspeicher die Statistik der im Lernverfahren verwendeten Daten möglichst gut repräsentiert.

Ein Merkmalsvektor fasst die numerisch (d.h. durch Zahlen) oder logisch (d.h. durch boolesche Werte) parametrisierbaren Eigenschaften eines zu erkennenden Musters (insbesondere eines Objektes) in vektorieller Weise zusammen. Verschiedene, für das Muster charakteristische numerisch oder logisch repräsentierte Merkmale bilden die Komponenten eines Merkmalsvektors. Die Gesamtheit der möglichen Merkmalsvektoren nennt man den Merkmalsraum oder den Raum der Merkmalsvektoren. Merkmalsvektoren erleichtern eine automatische Klassifikation und damit eine Objekterkennung, da die zu klassifizierenden Eigenschaften auf die Komponenten der Merkmalsvektoren reduziert werden. Häufig dienen sie als Eingabe für eine Clusteranalyse.

In der Musterklassifikation, insbesondere in der Objekterkennung, werden Muster anhand ihrer Merkmalsvektoren automatisch klassifiziert. Je besser die Merkmale, d.h. die Komponenten der Merkmalsvektoren, gewählt werden und je mehr Trainingsmaterial vorhanden (je größer also die Stichprobe der Lerndaten) ist, desto besser wird eine Klassifikation in der Erkennungsphase gelingen. Eine größere Wahl der Dimension des Merkmalsraums führt dabei regelmäßig zu einem größeren Bedarf an Trainingsmaterial und somit zu einem größeren Trainingsaufwand und zu einer Verlängerung der Trainingsdauer, ermöglicht aber auch bessere Klassifikationsergebnisse und somit eine erhöhte Erkennungswahrscheinlichkeit der zu erkennenden Objekte.

Die Arbeitsweise bestimmter Typen künstlicher neuronaler Netze sind zu einer sogenannten Vektorquantisierung äquivalent. Die Vektorquantisierung ist ein Verfahren zur Kompression und/oder Identifikation von Datensätzen.

Die Datensätze werden dazu in Merkmalsvektoren zusammengefasst. Die Idee der Vektorquantisierung besteht darin, diesen Merkmalsvektoren denjenigen Vektor aus einer Tabelle zuzuordnen, der dem betrachteten Merkmalsvektor am ähnlichsten ist. Statt alle Daten des Merkmalsvektors zu speichern, wird häufig nur der Index dieses ähnlichsten Vektors benötigt.

Die Vektorquantisierung besteht aus zwei Schritten. Im ersten Schritt, dem Training, muss die Tabelle (das sogenannte Codebuch) mit häufig vorkommenden Merkmalsvektoren erstellt werden. Im zweiten Schritt wird für weitere Vektoren jeweils der Codebuchvektor mit dem geringsten Abstand bestimmt. Zur Identifikation der Daten wird häufig nur der Index des Codebuchvektors benötigt, der auch ein Vektor sein kann, wenn das Codebuch mehrdimensional ist. Der korrespondierende Dekoder, das Erkennungsverfahren, muss über das gleiche Codebuch verfügen, das im Lernverfahen erstellt und/oder verwendet wurde, und kann dann aus dem Index eine Approximation des ursprünglichen Vektors erzeugen.

Im Rahmen der Objekterkennung wird die Vektorquantisierung zu einer Zuordnung von Datensätzen zu bestimmten Mustern verwendet. In diesem Fall wird der Abstand zwischen dem Merkmalsvektor und dem Codebuchvektor benutzt, um zu entscheiden, ob der betrachtete Datensatz einem Muster entspricht. Dabei wird in der Erkennungsphase derjenige Merkmalsvektor des Codebuchs ermittelt, der den geringsten Abstand zu dem aktuellen Merkmalsvektor des zu erkennenden Objektes aufweist. Der Abstand ist also ein Maß für die Ähnlichkeit der Merkmalsvektoren.

Der Abstand zwischen Merkmalsvektoren im Merkmalsraum wird dabei durch ein Abstandsmaß ermittelt, das auf dem Raum der Merkmalsvektoren definiert ist. Ist der Merkmalsraum ein Vektorraum im mathematischen Sinne, dann kann grundsätzlich jede Metrik im mathematischen Sinne als Abstandsmaß im Sinne der vorliegenden Erfindung dienen. Bevorzugte Abstandsmaße sind solche (durch eine Norm erzeugte) Metriken, die als Norm der Differenz zwei Merkmalsvektoren aufgefasst werden können, wobei diese Norm vorzugsweise durch ein Skalarprodukt auf dem Merkmalsraum induziert ist. Bevorzugte Beispiele für solche Metriken sind sogenannte euklidische Metriken. Sie entsprechen anschaulich der Länge des Differenzvektors zweier Merkmalsvektoren. Andere bevorzugte Beispiele sind sogenannte gewichtete Normen, bei denen die unterschiedlichen Komponenten der Merkmalsvektoren in unterschiedlicher Weise gewichtet werden. Eine geeignete, insbesondere anwendungsspezifische, Wahl der Werte dieser Gewichte ermöglicht eine unterschiedliche, insbesondere anwendungsspezifische, Gewichtung einzelner Merkmale bei der Objekterkennung, wodurch die Erkennungsleistung spürbar verbessert werden kann.

Welches Lernverfahren, insbesondere ob ein neuronales Netz oder welcher Typ eines neuronalen Netzes im Zusammenhang mit einer Ausführungsform der vorliegenden Erfindung zur Anwendung kommt, hängt unter anderem von den Umständen und Randbedingungen der konkreten Applikation ab, also insbesondere davon, wie komplex die zu lösende Objekterkennungsaufgabe ist, wieviele Ultraschallsensoren zur Verfügung stehen, wie groß die Anzahl der verschiedenen zu erkennenden Objekttypen ist, wie groß die Rechenleistung der Auswerteeinheit ist und welche Zeit für die Lernphase zur Verfügung steht.

Vorzugsweise stimmen die Zeitintervalle, während denen die einzelnen Ultraschallempfänger in der Mehrzahl von Ultraschallempfängern die Ultraschallwellen empfangen, wenigstens teilweise und/oder zeitweise überein. Diese Ausführungsform der Erfindung ermöglich die gemeinsame Auswertung der Eigenschaften, insbesondere der Hüllkurven, des Basisbandes und/oder der Phasen von Ultraschallwellen, die von unterschiedlichen Regionen der Oberfläche eines zu erkennenden Objektes während der Lernphase und/oder während der Erkennungsphase insbesondere in unterschiedliche Richtungen reflektiert werden. Dabei ist es vorteilhaft, wenn mehrere Ultraschallsender gleichzeitig oder sequenziell Ultraschall-Burstpakete und/oder Ultraschall-Pulse aussenden und währenddessen und/oder darauf folgend die am Objekt reflektierten Echos gleichzeitig von unterschiedlichen und insbesondere an unterschiedlichen Raumpunkten mit unterschiedlichen Orientierungen angeordneten Ultraschallempfängern empfangen werden.

Unter einem Burst-Signal versteht der Fachmann in der Nachrichtentechnik und der elektrischen Messtechnik ein Signal mit einer begrenzten Anzahl von Schwingungen vorzugsweise fester Frequenz, also ein Signal mit einer bestimmten endlichen Dauer. Im Gegensatz zu einem andauernden Sinussignal, das nur eine Frequenzkomponente hat, ist die Bandbreite eines Burst-Signals umso größer, je kürzer der Burst ist. Burst-Signale dienen auch zur zeitlich begrenzten Übertragung der Information der Phasenlage und der Frequenz einer Schwingung.

Vorzugsweise werden die Ultraschallwellen von einer Mehrzahl von Ultraschallsendern ausgesandt, und die Zeitintervalle, während denen die einzelnen Ultraschallsender in dieser Mehrzahl von Ultraschallsendern die Ultraschallwellen aussenden, stimmen wenigstens teilweise und/oder zeitweise überein. Diese Ausführungsformen der Erfindung ermöglichen die Auswertung von Interferenzen zwischen Ultraschallwellen, die von unterschiedlichen Regionen der Oberfläche eines zu erkennenden Objektes während der Lernphase und/oder während der Erkennungsphase insbesondere in unterschiedliche Richtungen reflektiert werden. Auch hierbei ist es vorteilhaft, wenn mehrere Ultraschallsender gleichzeitig oder sequenziell UltraschallBurstpakete und/oder Ultraschall-Pulse aussenden und währenddessen und/oder darauf folgend die am Objekt reflektierten Echos gleichzeitig von unterschiedlichen und insbesondere an unterschiedlichen Raumpunkten mit unterschiedlichen Orientierungen angeordneten Ultraschallempfängern empfangen werden.

Unter dem Begriff der Interferenz versteht der Fachmann in diesem Zusammenhang eine Gruppe von Phänomenen, die mit der Überlagerung (Superposition) von Wellen zusammenhängen. Löschen sich die Wellen dabei gegenseitig aus, so spricht man von destruktiver Interferenz. Verstärken sich die Amplituden, so spricht man von konstruktiver Interferenz. Das Muster aus Stellen konstruktiver und destruktiver Interferenz wird als Interferenzmuster bezeichnet. Im experimentellen Aufbau treten dabei häufig abwechselnd charakteristische Interferenzmaxima und Interferenzminima auf. Im Zusammenhang mit der vorliegenden Erfindung können Interferenzerscheinungen zur Messung von Längen oder Phasenverschiebungen mit sehr hoher Auflösung genutzt werden.

Vorzugsweise werden die Merkmalsvektoren auch, aber nicht notwendig ausschließlich, durch Auswertung von Interferenzen zwischen Ultraschallwellen gewonnen, die von unterschiedlichen Ultraschallsendern ausgesandt und/oder an wenigstens einem zu erkennenden Objekt reflektiert wurden oder werden. Bei diesen Ausführungsformen der Erfindung sind unter den Komponenten der Merkmalsvektoren vorzugsweise auch geometrische Charakteristika von Interferenzmustern, insbesondere Abstände von Bereichen konstruktiver und/oder destruktiver Interferenz. Es ist ein Vorteil des erfindungsgemäßen Verfahrens, dass eine Fokussierung auf für die Objekterkennung relevante Merkmale wenigstens teilweise automatisch im Rahmen der Lernphase erfolgt, ohne dass der Anwender diesen Vorgang planen oder bewusst steuern könnte oder müsste.

Vorzugsweise werden die Merkmalsvektoren wenigstens teilweise aus diskreten Abtastwerten der Hüllkurven von Ultraschallwellen gewonnen, die von unterschiedlichen Ultraschallsendern ausgesandt und/oder an wenigstens einem zu erkennenden Objekt reflektiert wurden oder werden. Dabei ist vorzugsweise auf die Berücksichtigung der Gesetzmäßigkeiten der digitalen Abtastung, insbesondere auf das Abtasttheorem zu achten.

Vorzugsweise werden die Merkmalsvektoren wenigstens teilweise aus diskreten Abtastwerten des Basisbands, vorzugsweise auch aus den Phasen, von Ultraschallwellen gewonnen, die von unterschiedlichen Ultraschallsendern ausgesandt und/oder an wenigstens einem zu erkennenden Objekt reflektiert wurden oder werden. Dabei werden das Basisbandsignal und/oder die Phasen vorzugsweise ausgemessen und/oder durch eine Auswerteeinheit ausgewertet.

Vorzugsweise sind die Ultraschallempfänger und der wenigstens eine Ultraschallsender im Raum verteilt um das wenigstens eine zu erkennende Objekt herum angeordnet. Vorzugsweise treffen sich die Achsen der Ultraschallsender und/oder Ultraschallempfänger in einem Raumpunkt, und/oder sie liegen in einer Ebene und/oder sind um bestimmte Winkel, besonders vorzugsweise um 15 Grad zueinander, versetzt.

Unter einer Achse eines Ultraschallsenders und/oder Ultraschallempfängers soll in diesem Zusammenhang eine Symmetrieachse eines Ultraschallsenders und/oder Ultraschallempfängers verstanden werden, also eine Achse, um die ein Ultraschallsender und/oder Ultraschallempfänger gedreht werden kann, ohne das von ihm abgestrahlte Wellenfeld bzw. seine Empfangscharakteristik zu verändern.

Vorzugsweise stimmen die Zeitintervalle, während denen die einzelnen Ultraschallempfänger in der Mehrzahl von Ultraschallempfängern die Ultraschallwellen empfangen, wenigstens teilweise und/oder zeitweise mit den Zeitintervallen überein, während denen der wenigstens eine Ultraschallsender diese Ultraschallwellen aussendet. Besonders vorteilhaft ist insbesondere ein gleichzeitiges Senden und Empfangen aller beteiligten Ultraschallsender und Ultraschallempfänger, weil bei dieser Ausführungsform der Erfindung mit einer besonders hohen Informationsdichte im Ultraschallwellenfeld gerechnet werden kann.

Vorzugsweise sendet der wenigstens eine Ultraschallsender die Ultraschallwellen in Form einer zeitlichen Folge von Pulsen aus, deren Pulslängen innerhalb der Folge variieren und besonders vorzugsweise Werte zwischen einer und 10 oder 20 Wellen aufweisen.

Vorzugsweise werden die Merkmalsvektoren auch unter Berücksichtigung von Daten anderer Sensoren, vorzugsweise von Sensoren für die Temperatur, den Luftdruck und/oder die Luftfeuchtigkeit, gewonnen. In diesem Zusammenhang kommen unterschiedliche Verfahren der sogenannten Multi-Sensor-Daten-Fusion, insbesondere Bayessche Schätzverfahren, die Dempster-Shafer-Evidenztheorie, die Fuzzy-Logik und vor allem auch die künstlichen neuronalen Netze sehr vorteilhaft zum Einsatz. Auf diese Weise können insbesondere wechselnde Einflüsse der Temperatur, des Luftdrucks und/oder der Luftfeuchtigkeit auf die Ultraschall-Reflektionseigenschaften der Oberflächen der zu erkennenden Objekte kompensiert oder zur Verbesserung der Erkennungsrate verwendet werden.

Eine erfindungsgemäße Vorrichtung zur Objekterkennung mittels Ultraschall weist auf:
a) eine Mehrzahl von Ultraschallempfängern und
b) wenigstens einen Ultraschallsender, wobei die Mehrzahl von Ultraschallempfängern und der wenigstens eine Ultraschallsender im Raum verteilt um das wenigstens eine zu erkennende Objekt herum angeordnet sind, und
c) eine Auswerteeinheit, die zur Durchführung eines erfindungsgemäßen Verfahrens oder eines seiner Ausführungsbeispiele eingerichtet ist.

Vorzugsweise sind die Ultraschallempfänger wenigstens teilweise auch als Ultraschallsender in der Form sogenannter integrierter Sensoren oder Sonden ausgestaltet. Solche Bauformen haben unter anderem den Vorteil, dass die Achsen der Sender und Empfänger paarweise übereinstimmen, was zu einer guten Erkennungsrate beitragen kann.

Vorteilhafte Ausführungsbeispiele der Erfindung werden nachstehend mit Bezug auf die beigefügte schematische Figuren erläutert. Hierin zeigt
- Fig. 1: eine schematische Darstellung eines bevorzugten Ausführungsbeispiels einer erfindungsgemäßen Vorrichtung;
- Fig. 2: eine schematische Darstellung eines bevorzugten Ausführungsbeispiels eines erfindungsgemäßen Verfahrens.

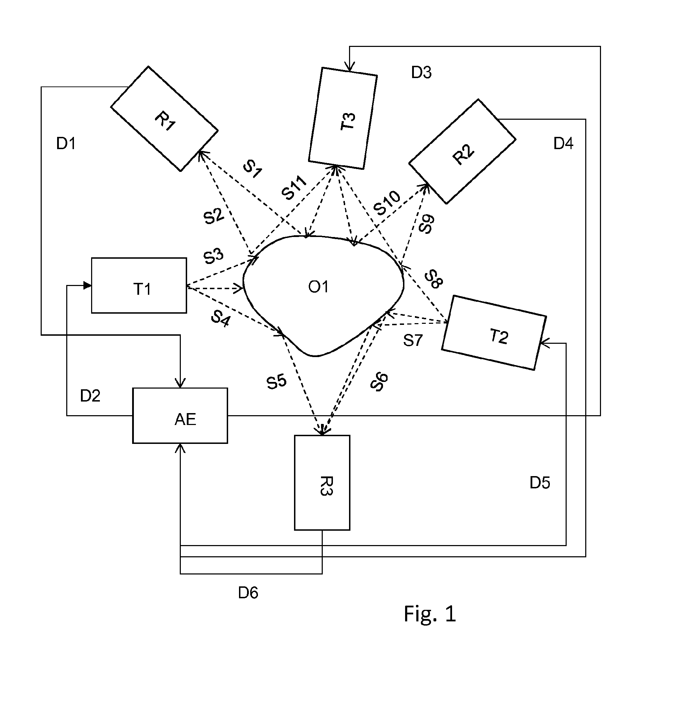

Die Erfindung wird vorzugsweise durch einen Hardware-Aufbau gemäß Figur 1 in Verbindung mit einer erfindungsgemäßen Software zur Auswertung der durch den Hardware-Aufbau erhobenen Messdaten verwirklicht. Der Hardware-Aufbau weist vorzugsweise mehrere Ultraschall-Sensoren, insbesondere mehrere Ultraschallempfänger R1, R2, R3 und wenigsten einen Ultraschallsender T1, T2, T3 auf, die gleichzeitig oder sequenziell Ultraschall-Burstpakete aussenden und darauf folgend die am Objekt 01 reflektierten Echos vorzugsweise gleichzeitig empfangen. Die Sensoren können als integrierte Sender-Empfänger-Einheiten ausgebildet sein und in Anzahl und Position variieren. Bei einer bevorzugten gleichzeitigen Aufnahme durch Ultraschallempfänger von mehreren Seiten kann das Sendesignal, insbesondere die vom Objekt reflektierten Ultraschallwellen, wahlweise von einem einzelnen oder auch von mehreren Sensoren gleichzeitig ausgesendet werden. Auf diese Weise erhält man eine räumliche Information über die Oberflächeneigenschaften des Gegenstandes. Insbesondere beim Aussenden des Schalls von mehreren Quellen werden entsprechend der Beschaffenheit des betrachteten Objektes oder der betrachteten Objekte charakteristische Interferenzen im Schall entstehen, die zu einem ebenso charakteristischen Echo-Profil an den empfangenden Sensoren führen.

In der Figur 1 senden die Ultraschallsender T1, T2 und T3 insbesondere die Ultraschallwellen S3, S4, S7 und S8 aus, die an dem Objekt 01 reflektiert werden und als reflektierte Ultraschallwellen S1, S2, S5, S6, S9, S10 und S11 von den Ultraschallempfängern R1, R2 und R3 empfangen werden. Dabei interferieren bei gleichzeitigem Empfang die Ultraschallwellen S1 und S2, S5 und S6 sowie einerseits S9 und S10 und andererseits S8 und S11. Über die Datenleitungen D2, D3 und D5 steuert die Auswerteeinheit AE die Ultraschallsender T1, T2 und T3. Über die Datenleitungen D1, D4 und D6 empfängt die Auswerteeinheit AE die Messdaten von den Ultraschallempfängern R1, R2 und R3. Sofern die Ultraschallempfänger zusammen mit den Ultraschallsendern in sogenannte "Sensoren" oder "Sonden" integriert sind, können die Datenleitungen für die Ultraschallempfänger mit den Datenleitungen für die Ultraschallsender zusammenfallen.

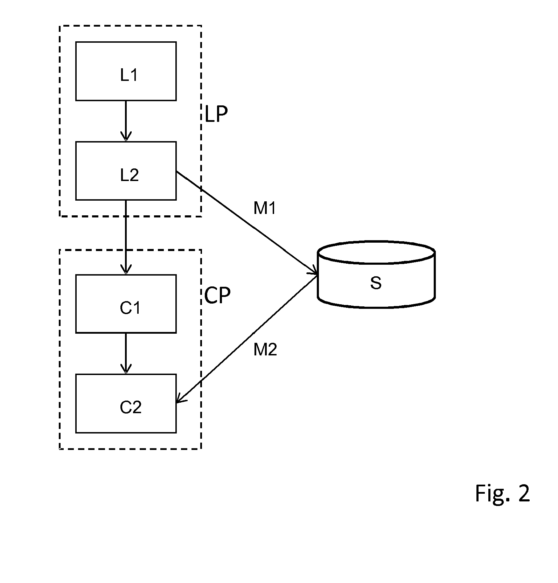

Die Auswertung erfolgt vorzugsweise in einem lernbaren Modell, vorzugsweise realisiert durch ein künstliches Neuronales Netzwerk oder aber durch andere Machine Learning-Ansätze. Man unterscheidet, wie in der Figur 2 gezeigt, die Lern-Phase LP, gegliedert in die Phasen L1 und L2, und die Anwendungsphase oder Erkennungphase CP, gegliedert in die Phasen C1 und C2:
In der Lernphase werden dem System die zu unterscheidenden Objekte präsentiert, wobei vorzugsweise die Hüllkurven der Echos aller beteiligten Sensoren in der Phase L1 abgetastet und in der Phase L2 als diskrete Werte, die sogenannten Merkmalsvektoren M1, in eine Speichereinrichtung S, vorzugsweise in eine Speichertabelle S, überführt werden. Diese Tabelle wird vorzugsweise annotiert, d.h. es werden allen Echos, die den gleichen Objekttyp repräsentieren, ein jeweiliger Wunsch-Output des Systems hinzugefügt. Diese annotierte Liste wird nun benutzt, um ein Computermodell so zu trainieren, dass es die Zuordnung von Abtastwerten zur Annotation in Folge des Trainings zunehmend beherrscht. Es können hierfür Standard-Ansätze in Machine Learning Algorithmen genutzt werden.

Anstatt die Hüllkurven abzutasten, kann auch das Basisbandsignal abgetastet werden um das System zu trainieren. Beide Methoden können auch kombiniert werden. Zusätzlich zu den Ultraschallsignalen können weitere Messgrößen hinzugefügt werden, um das Modell zu trainieren. Zum Beispiel kann man den Temperaturwert von einem Temperatursensor als zusätzlichen Input in dem Machine-Learning System berücksichtigen, und/oder insbesondere zur Laufzeitkompensation beliebige andere Prozesswerte mit aufnehmen, um kausale Abhängigkeiten innerhalb des Prozesses mit im gelernten Modell zu berücksichtigen.

In der Erkennungsphase CP wird dem System vorzugsweise ein Objekt vorgelegt, das im Charakter den Objekten der Trainingsphase gleicht. Die Hüllkurve, das Basisband oder andere Eigenschaften der reflektierten Ultraschallwellen werden in der Phase C1 vorzugsweise auf die gleiche Weise abgetastet wie in der Phase L1. Die Merkmalsvektoren M2 werden aus diesen Abtastwerten ermittelt und dem künstlichen Neuronalen Netz (oder einem anderen Machine-Learning-Modell) präsentiert. Es erzeugt währned der Phase C2 als Output den Annotationswert, der am wahrscheinlichsten zu dem derzeitigen Echo passt.

Besondere Vorteile bietet die erfindungsgemäße Kombination einer ObjektBetrachtung mittels Ultraschall gleichzeitig von verschiedenen Seiten mit einem lernenden Computer-Modell. Die Objektbetrachtung von verschiedenen Seiten bewirkt, dass nicht nur ein einzelnes Echo betrachtet wird, was von einem einzelnen Sensor ausgesendet wurde, sondern viel mehr die Überlagerung mehrerer Echos in Raum und Zeit. Diese Signale sind von komplexer Natur, da sie Information über die dreidimensionale Form des betrachteten Objektes enthalten. Das Machine-Learning-Modell wird genutzt, um die Zuordnung dieser komplexen Signal-Charakteristiken zu Objekt-Typen zu erreichen.

## Patentansprüche

1. Verfahren zur Objekterkennung mittels Ultraschall, aufweisend eine Lernphase und eine der Lernphase (LP) zeitlich nachfolgende Erkennungsphase (CP) mit folgenden Schritten:
a) In der Lernphase empfängt eine Mehrzahl (R1, R2, R3) von Ultraschallempfängern Ultraschallwellen (S1, S2, S5, S6, S9, S10, S11), die von wenigstens einem Ultraschallsender (T1, T2, T3) ausgesandt (S3, S4, S7, S8) und an wenigstens einem in der Erkennungsphase zu erkennenden Objekt (01) reflektiert wurden oder werden;
b) aus den während der Lernphase (LP) empfangenen Ultraschallwellen werden Merkmalsvektoren (M1) gewonnen und in einer Speichereinrichtung (S) gespeichert;
c) in der Erkennungsphase (CP) empfängt die Mehrzahl (R1, R2, R3) von Ultraschallempfängern Ultraschallwellen (S1, S2, S5, S6, S9, S10, S11), die von dem wenigstens einen Ultraschallsender (T1, T2, T3) ausgesandt (S3, S4, S7, S8) und an dem wenigstens einen in der Erkennungsphase zu erkennenden Objekt (01) reflektiert wurden oder werden;
d) aus den während der Erkennungsphase empfangenen Ultraschallwellen werden Merkmalsvektoren (M2) gewonnen und wenigstens teilweise mit während der Lernphase gespeicherten Merkmalsvektoren (M1) verglichen;
e) die Erkennung eines Objektes (01) erfolgt durch Minimierung eines im Raum der Merkmalsvektoren definierten Abstandsmaßes zwischen wenigstens einem Merkmalsvektor eines in der Erkennungsphase zu erkennenden Objektes und wenigstens einem in der Lernphase gespeicherten Merkmalsvektor.

2. Verfahren nach Anspruch 1, **dadurch gekennzeichnet, dass** die Zeitintervalle, während denen die einzelnen Ultraschallempfänger in der Mehrzahl (R1, R2, R3) von Ultraschallempfängern die Ultraschallwellen empfangen, wenigstens teilweise und/oder zeitweise, vorzugsweise vollständig, übereinstimmen.

3. Verfahren nach einem der vorhergehenden Ansprüche, **dadurch gekennzeichnet, dass** die Ultraschallwellen von einer Mehrzahl (R1, R2, R3) von Ultraschallsendern ausgesandt werden, und dass die Zeitintervalle, während denen die einzelnen Ultraschallsender in dieser Mehrzahl von Ultraschallsendern (T1, T2, T3) die Ultraschallwellen aussenden, wenigstens teilweise und/oder zeitweise, vorzugsweise vollständig, übereinstimmen.

4. Verfahren nach Anspruch 3, **dadurch gekennzeichnet, dass** die Merkmalsvektoren (M1, M2) auch durch Auswertung von Interferenzen zwischen Ultraschallwellen gewonnen werden, die von unterschiedlichen Ultraschallsendern ausgesandt und/oder an wenigstens einem zu erkennenden Objekt (01) reflektiert wurden oder werden.

5. Verfahren nach einem der vorhergehenden Ansprüche, **dadurch gekennzeichnet, dass** die Merkmalsvektoren wenigstens teilweise aus diskreten Abtastwerten der Hüllkurven von Ultraschallwellen gewonnen werden, die von unterschiedlichen Ultraschallsendern (T1, T2, T3) ausgesandt und/oder an wenigstens einem zu erkennenden Objekt (01) reflektiert wurden oder werden.

6. Verfahren nach einem der vorhergehenden Ansprüche, **dadurch gekennzeichnet, dass** die Merkmalsvektoren wenigstens teilweise aus diskreten Abtastwerten des Basisbands, vorzugsweise auch aus den Phasen, von Ultraschallwellen gewonnen werden, die von unterschiedlichen Ultraschallsendern (T1, T2, T3) ausgesandt und/oder an wenigstens einem zu erkennenden Objekt (01) reflektiert wurden oder werden.

7. Verfahren nach einem der vorhergehenden Ansprüche, **dadurch gekennzeichnet, dass** die Ultraschallempfänger (R1, R2, R3) und der wenigstens eine Ultraschallsender (T1, T2, T3) im Raum verteilt um das wenigstens eine zu erkennende Objekt (01) herum angeordnet sind, wobei vorzugsweise die Achsen der Ultraschallsender und/oder Ultraschallempfänger sich in einem Raumpunkt treffen und/oder in einer Ebene liegen und/oder um bestimmte Winkel, besonders vorzugsweise um 15 Grad zueinander versetzt sind.

8. Verfahren nach einem der vorhergehenden Ansprüche, **dadurch gekennzeichnet, dass** die Zeitintervalle, während denen die einzelnen Ultraschallempfänger in der Mehrzahl (R1, R2, R3) von Ultraschallempfängern die Ultraschallwellen empfangen, wenigstens teilweise und/oder zeitweise, vorzugsweise vollständig, mit den Zeitintervallen übereinstimmen, während denen der wenigstens eine Ultraschallsender (T1, T2, T3) die Ultraschallwellen aussendet.

9. Verfahren nach einem der vorhergehenden Ansprüche, **dadurch gekennzeichnet, dass** der wenigstens eine Ultraschallsender (T1, T2, T3) die Ultraschallwellen in Form einer zeitlichen Folge von Pulsen aussendet, deren Pulslängen innerhalb der Folge variieren und vorzugsweise Werte zwischen einer und 10 oder 20 Wellen aufweisen.

10. Verfahren nach einem der vorhergehenden Ansprüche, **dadurch gekennzeichnet, dass** die Merkmalsvektoren auch unter Berücksichtigung von Daten anderer Sensoren, vorzugsweisen von Sensoren für die Temperatur, den Luftdruck und/oder die Luftfeuchtigkeit, gewonnen werden.

11. Vorrichtung zur Objekterkennung mittels Ultraschall, aufweisend
a) eine Mehrzahl von Ultraschallempfängern (R1, R2, R3) und
b) wenigstens einen Ultraschallsender (T1, T2, T3), wobei die Mehrzahl von Ultraschallempfängern und der wenigstens eine Ultraschallsender im Raum verteilt um das wenigstens eine zu erkennende Objekt herum angeordnet sind, und
c) eine Auswerteeinheit (AE), die zur Durchführung eines Verfahrens nach einem der vorhergehenden Ansprüche eingerichtet ist.

12. Vorrichtung nach Anspruch 11, **dadurch gekennzeichnet, dass** die Achsen der Ultraschallsender und/oder Ultraschallempfänger sich in einem Raumpunkt treffen.

13. Vorrichtung nach einem der Ansprüche 11 oder 12, **dadurch gekennzeichnet, dass** die Achsen der Ultraschallsender und/oder Ultraschallempfänger in einer Ebene liegen.

14. Vorrichtung nach einem der Ansprüche 11 bis 13, **dadurch gekennzeichnet, dass** die Achsen der Ultraschallsender und/oder Ultraschallempfänger um bestimmte Winkel, vorzugsweise um 15 Grad zueinander versetzt sind.

15. Vorrichtung nach einem der Ansprüche 11 bis 14, **dadurch gekennzeichnet, dass** die Ultraschallempfänger wenigstens teilweise auch als Ultraschallsender ausgestaltet sind.
